(19)

Europäisches Patentamt
European Patent Office
Office européen des brevets

(11) **EP 3 113 494 A1**

(12) **EUROPEAN PATENT APPLICATION**

(43) Date of publication:
**04.01.2017 Bulletin 2017/01**

(51) Int Cl.:
**H04N 19/30** (2014.01)

(21) Application number: **15306039.7**

(22) Date of filing: **30.06.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Thomson Licensing**
**92130 Issy-les-Moulineaux (FR)**

(72) Inventors:
• **LASSERRE, Sébastien**
**35576 Cesson Sévigné Cedex (FR)**

• **OLIVIER, Yannick**
**35576 Cesson Sévigné Cedex (FR)**
• **LE LEANNEC, Fabrice**
**35576 Cesson Sévigné Cedex (FR)**
• **TOUZE, David**
**35576 Cesson Sévigné Cedex (FR)**

(74) Representative: **Perrot, Sébastien**
**TECHNICOLOR**
**1-5, rue Jeanne d'Arc**
**92130 Issy-les-Moulineaux (FR)**

(54) **METHOD AND DEVICE FOR ENCODING A HIGH-DYNAMIC RANGE IMAGE**

(57) The present invention generally relates to a method and device for encoding an image. The method comprises:
- calculating (13) from the image a residual image with an output dynamic range;
- clipping (18) the residual image;
- encoding (19) the clipped residual image;

wherein clipping (18) a pixel of the residual image comprises:

- determining (51) the pixel in the input dynamic range space corresponding to the pixel to clip,
- obtaining the clipped pixel by projecting (52) the corresponding pixel in the input dynamic range space by preserving the hue,

the clipped pixel in the output dynamic range space is then the pixel corresponding (53) to the projected pixel in the input dynamic range space.

Fig. 5

EP 3 113 494 A1

## Description

### 1. Field of invention.

The present invention generally relates to image/video encoding and decoding. The technical field of the present invention is related to encoding of an image whose pixels values belong to a high-dynamic range, by using a technique based on the determination and the compression of luminance backlight images, and the computation and compression of standard-dynamic range residual images; the technical field is related in particular to clipping standard-dynamic range residual images without affecting the color of high-dynamic range images.

### 2. Technical background.

The present section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Standard-Dynamic-Range images (SDR images) are images whose luminance values are represented with a limited number of bits (most often 8 or 10). These images were sometimes previously named Low-Dynamic-Range images (LDR). This limited representation does not allow correct rendering of small signal variations, in particular in dark and bright luminance ranges. In High-Dynamic-Range images (HDR images), the signal representation is extended in order to maintain a high accuracy of the signal over its entire range. In HDR images, pixel values are usually represented in floating-point format (either 32-bit or 16-bit for each component, namely float or half-float), the most popular format being open-EXR half-float format (16-bit per RGB component, i.e. 48 bits per pixel) or in integers with a long representation, typically at least 16 bits.

A typical approach for encoding an HDR image is to reduce the dynamic range of the image in order to encode the image by means of a traditional encoding scheme (initially configured to encode SDR images).

According to a first approach, a tone-mapping operator is applied to the input HDR image and the tone-mapped image is then encoded by means of a traditional 8-10 bit depth encoding scheme such as JPEG/JPEG200 or MPEG-2, H.264/AVC for video ("Advanced video coding for generic audiovisual Services", SERIES H: AUDIOVISUAL AND MULTIMEDIA SYSTEMS, Recommendation ITU-T H.264, Telecommunication Standardization Sector of ITU, January 2012). Then, an inverse tone-mapping operator is applied to the decoded image and a residual image is calculated between the input image and the decoded and inverse-tone-mapped image. Finally, the residual image is encoded by means of a second traditional 8-10 bit-depth encoder scheme.

This first approach is backward compatible in the sense that a low dynamic range image may be decoded and displayed by means of a traditional apparatus.

However, this first approach uses two encoding schemes and limits the dynamic range of the input image to be twice the dynamic range of a traditional encoding scheme (16-20 bits). Moreover, such approach leads sometimes to a standard dynamic range image with a weaker correlation with the input HDR image. This leads to low coding performance of the image.

According to a second approach, a backlight image is determined from the luminance component of the input HDR image. A residual image is then obtained by dividing the input HDR image by the backlight image and both the backlight image and the residual image are directly encoded.

This specific approach for encoding an input HDR image is not backward compatibility with a traditional apparatus which is not able to decode and/or display a high dynamic range.

A former application, not yet published, has disclosed a method of computation of the residual images ensuring that the residual images have a standard dynamic range in order to be encoded with a standard dynamic range codec, advantageously a 8/10 bits legacy codec. This disclosure provides a viewable residual image, i.e. a residual image in the sense that resulting residual image renders artistically the tone-mapped scene reasonably well and consistently compared to the original scene in the image. This method is thus backward compatible because the viewable residual image may be decoded and/or displayed by a traditional apparatus which is not able to handle high dynamic range.

In order to insure a limited number of bits for the dynamic of the images to be sent to the standard dynamic range codec, an inevitable step of clipping is applied. If the clipping step is not performed carefully, this may lead to unacceptable color shift in high luminance pixels. The disclosure provides several methods insuring as best as possible the preservation of colors.

The problem of color clipping and color shift in high luminance pixels is well known and different solutions have been proposed to deal with it, in particular hue preserving clipping methods.

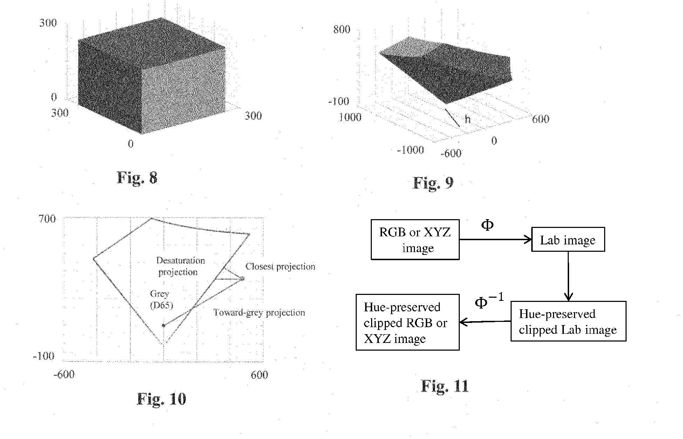

As represented in **Fig. 11,** the principle of known hue preserving clipping methods is to change the image space from RGB or XYZ, thanks to a transform $\Phi$, to a space in which the hue is well defined, like HSV or Lab spaces. The clipping is then performed thanks to a projection onto an acceptable domain while preserving the hue, and the inverse transform $\Phi$-1 is then applied to change the image space back into RBG or XYZ.

The clipping method, for example when applied on a mapped residual SDR image, may lead to a hue shift in the HDR image, because the multiplication by the backlight and the mapping do not preserve the domains with constant hue.

### 3. Summary of the invention.

The invention sets out to remedy some of the drawbacks of the prior art with a method for encoding a image with an input dynamic range comprising:

- calculating from the image a residual image with an output dynamic range,
- clipping residual image, and
- encoding the clipped residual image; wherein

clipping a pixel of the residual image comprises:

- determining the pixel in the input dynamic range space corresponding to the pixel to clip, and
- obtaining the clipped pixel by projecting the corresponding pixel in
  the input dynamic range space by preserving the hue,

the clipped pixel in the output dynamic range space is then the pixel corresponding (53) to the projected pixel in the input dynamic range space.

Clipping the residual image pixels by projecting the corresponding pixels in the input dynamic range space preserves the hue of the original pixels in the input dynamic range color space, leading to a better viewer experience for people who watch the reconstructed or decompressed HDR images.

According to an embodiment the output dynamic range is smaller than the input dynamic range. The encoding scheme is backward compatible with existing infrastructure (codec, displays, distribution channels, etc.) because only the residual image, which has a low or standard dynamic range, typically 8-10 bits, may be transmitted over such infrastructure to display a low or standard dynamic range version of the image.

According to an embodiment the input dynamic range format and the output dynamic range format are either RGB or XYZ. RGB and XYZ are common color image formats, allowing low or standard or high dynamic ranges.

According to an embodiment, projecting the corresponding pixel is performed toward a pixel inside the acceptable domain in the input dynamic range. Defining a target pixel inside the acceptable domain in the input dynamic range space, and projecting the corresponding pixel toward this pixel provides an easy implementation of the projection.

According to an embodiment the projection is performed by desaturation and preserving the luminance. The projection is then performed toward the target pixel with same hue and luminance than the corresponding pixel, but with saturation set to zero. The projection is then very easy to implement

According to an embodiment, a backlight image is obtained from the image, and the residual image is calculated by dividing the image by the backlight image. This provides a viewable residual image, i.e. a residual image in the sense that resulting residual image renders artistically the tone-mapped scene reasonably well and consistently compared to the original scene in the image.

According to an embodiment, a backlight image is obtained from the image and encoded, and the residual image is calculated by dividing the image by the decoded version of the backlight image. Encoding a high dynamic range image by means of such method leads to an efficient encoding scheme because the residual image (low dynamic range image or standard dynamic range image), which is highly spatially correlated (and temporally correlated with other images of a same sequence of images), and the backlight image are encoded separately. A coding gain is thus reached because of the high compression rate of the residual image and of the little amount of data to encode the backlight image.

According to an embodiment, obtaining the backlight image from the image comprises:

- obtaining a backlight image from a luminance component of the image; and
- modulating the backlight image with a mean luminance value of the image.

Modulating the backlight image with a mean luminance value of the image improves the global luminance coherence between the image and the residual image, e.g. a bright region in the image appears bright in the residual image and a dark region in the image appears dark in the residual image.

According to an embodiment, obtaining the backlight image from the image further comprises normalizing the backlight image by its mean value before modulating the backlight image. This allows to get a mid-gray-at-one backlight image for the image.

According to an embodiment, the residual image is tone-mapped. Tone-mapping the residual image may comprise either a gamma correction or a SLog correction according to the pixel values of the residual image.

Gamma and SLog corrections, such that there is no loss of dark and bright information, lead to the reconstruction of an HDR image, from the residual image and the backlight image, with high precision. Moreover, gamma and S-log correction avoid flat clipped areas in both the reconstructed HDR image and the viewable residual image.

The small bit-stream, which contains the backlight data, may be carried in a side container over a dedicated infrastructure to distribute the original version of the image (i.e. a HDR image).

According to another of its aspects, the invention relates to a device for encoding an image which implements the above methods.

The specific nature of the invention as well as other objects, advantages, features and uses of the invention will become evident from the following description of a preferred embodiment taken in conjunction with the accompanying drawings.

**4. List of figures.**

The embodiments will be described with reference to the following figures:

- **Fig. 1** shows a block diagram of the steps of a method for encoding an image I in accordance with an embodiment of the invention;
- **Fig. 2** shows a block diagram of a step of the method in accordance with an embodiment of the invention;
- **Fig. 3** shows a block diagram of a step of the method in accordance with an embodiment of the invention;
- **Fig. 4** shows a block diagram of a step of the method in accordance with an embodiment of the invention;
- **Fig. 5** shows a block diagram of the steps of a clipping method, in accordance with an embodiment of the invention;
- **Fig. 6** shows an example of an architecture of a device in accordance with an embodiment of the invention;
- **Fig. 7** shows two remote devices communicating over a communication network in accordance with an embodiment of the invention;
- **Fig. 8** shows the original RGB space of a standard dynamic range tone-mapped residual image;
- **Fig. 9** shows the image of the range RGB space of Fig. 8 in the high dynamic range Lab space;;
- **Fig. 10** shows, in the high dynamic range Lab space, the clipping by projection of a pixel being outside the envelope of the image of the standard dynamic range domain;
- **Fig. 11** shows a standard scheme for hue preserving clipping of standard dynamic range images;

**5. Detailed description of preferred embodiments of the invention.**

The present invention will be described more fully hereinafter with reference to the accompanying figures, in which embodiments of the invention are shown. This invention may, however, be embodied in many alternate forms and should not be construed as limited to the embodiments set forth herein. Accordingly, while the invention is susceptible to various modifications and alternative forms, specific embodiments thereof are shown by way of example in the drawings and will herein be described in detail. It should be understood, however, that there is no intent to limit the invention to the particular forms disclosed, but on the contrary, the invention is to cover all modifications, equivalents, and alternatives falling within the spirit and scope of the invention as defined by the claims. Like numbers refer to like elements throughout the description of the figures.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises", "comprising," "includes" and/or "including" when used in this specification, specify the presence of stated features, integers, steps, operations, elements, and/or components but do not preclude the presence or addition of one or more other features, integers, steps, operations, elements, components, and/or groups thereof. Moreover, when an element is referred to as being "responsive" or "connected" to another element, it can be directly responsive or connected to the other element, or intervening elements may be present. In contrast, when an element is referred to as being "directly responsive" or "directly connected" to other element, there are no intervening elements present. As used herein the term "and/or" includes any and all combinations of one or more of the associated listed items and may be abbreviated as"/".

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element without departing from the teachings of the disclosure.

Although some of the diagrams include arrows on communication paths to show a primary direction of communication, it is to be understood that communication may occur in the opposite direction to the depicted arrows.

Some embodiments are described with regard to block diagrams and operational flowcharts in which each block represents a circuit element, module, or portion of code which comprises one or more executable instructions for implementing the specified logical function(s). It should also be noted that in other implementations, the function(s) noted in the blocks may occur out of the order noted. For example, two blocks shown in succession may, in fact, be executed substantially concurrently or the blocks may sometimes be executed in the reverse order, depending on the functionality involved.

Reference herein to "one embodiment" or "an embodiment" means that a particular feature, structure, or characteristic described in connection with the embodiment can be included in at least one implementation of the invention. The appearances of the phrase "in one embodiment" or "according to an embodiment" in various places in the specification are not necessarily all referring to the same embodiment, nor are separate or alternative embodiments necessarily mutually exclusive of other embodiments.

Reference numerals appearing in the claims are by way of illustration only and shall have no limiting effect on the scope of the claims.

While not explicitly described, the present embodiments and variants may be employed in any combination or sub-combination.

The invention is described for encoding an image but extends to the encoding of a sequence of images (video) because each image of the sequence is sequentially encoded as described below.

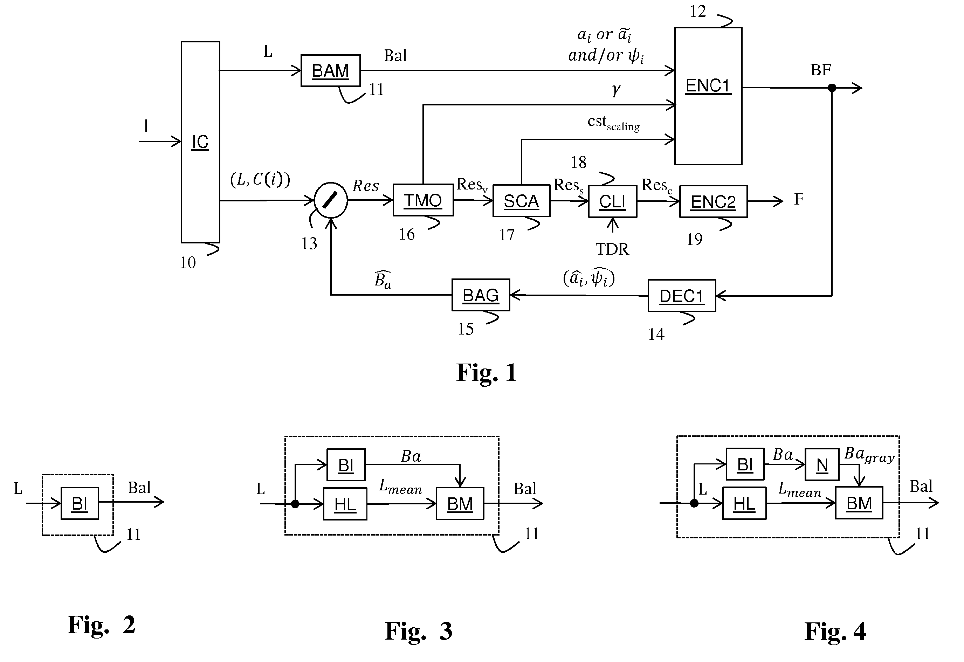

**Fig. 1** shows a block diagram of the steps of a method for encoding an image I in accordance with an embodiment of the invention.

In step 10, a module IC obtains the luminance component L and potentially at least one color component C(i) of the image I to be encoded.

For example, when the image I belongs to the color space (X,Y,Z), the luminance component L is obtained by a transform f(.) of the component Y, e.g. L=f(Y).

When the image I belongs to the color space (R,G,B), the luminance component L is obtained, for instance in the 709 gamut, by a linear combination which is given by:

$$L = 0.2127.R + 0.7152.G + 0.0722.B$$

In step 11, a module BAM determines a backlight image Bal from the luminance component L of the image I.

According to an embodiment of the step 11, illustrated in **Fig. 2,** a module BI determines a backlight image Ba as being a weighted linear combination of shape functions $\psi_i$ given by:

$$Ba = \sum_i \ a_i \psi_i \qquad (1)$$

with $a_i$ being weighting coefficients.

Thus, determining a backlight image Ba from a luminance component L consists in finding optimal weighting coefficients (and potentially also optimal shape functions if not known beforehand) in order that the backlight image Ba fits the luminance component L.

There are many well-known methods to find the weighting coefficients $a_i$. For example, one may use a least mean square method to minimize the mean square error between the backlight image Ba and the luminance component L.

The invention is not limited to any specific method to obtain the backlight image Ba.

It may be noted that the shape functions may be the true physical response of a display backlight (made of LED's for instance, each shape function then corresponding to the response of one LED) or may be a pure mathematical construction in order to fit the luminance component at best.

According to this embodiment, the backlight image Bal, output from step 11, is the backlight image Ba given by equation (1).

According to an embodiment of the step 11, illustrated in **Fig. 3,** a module BM modulates the backlight image Ba (given by equation (1)) with a mean luminance value $L_{mean}$ of the image I obtained by the means of a module HL.

According to this embodiment, the backlight image Bal, output from step 11, is the modulated backlight image.

According to an embodiment, the module HL is configured to calculate the mean luminance value $L_{mean}$ over the whole luminance component L.

According to an embodiment, the module HL is configured to calculate the mean luminance value $L_{mean}$ by

$$L_{mean} = E\left(L^\beta\right)^{\frac{1}{\beta}}$$

with $\beta$ being a coefficient less than 1 and E(X) the mathematical expectation value (mean) of the luminance component L.

This last embodiment is advantageous because it avoids that the mean luminance value $L_{mean}$ be influenced by a few pixels with extreme high values which usually leads to very annoying temporal mean brightness instability when the image I belongs to a sequence of images.

The invention is not limited to a specific embodiment for calculating the mean luminance value $L_{mean}$.

According to a variant of this embodiment, illustrated in **Fig. 4,** a module N normalizes the backlight image Ba (given by equation (1)) by its mean value E(Ba) such that one gets a mid-gray-at-one backlight image $Ba_{gray}$ for the image (or for all images if the image I belongs to a sequence of images):

$$Ba_{gray} = \frac{Ba}{E(Ba)}$$

Then, the module BM is configured to modulate the mid-gray-at-one backlight image $Ba_{gray}$ with the mean luminance value $L_{mean}$ of the image L, by using the following relation

$$Ba_{mod} \approx cst_{mod}.L_{mean}{}^\alpha.Ba_{gray} \qquad (2)$$

with $cst_{mod}$ being a modulation coefficient and $\alpha$ being another modulation coefficient less than 1, typically 1/3.

According to this variant, the backlight image Bal, output from step 11, is the modulated backlight image $Ba_{mod}$ given by equation (2).

It may be noted that the modulation coefficient $cst_{mod}$ is tuned to get a good looking brightness for the residual image and highly depends on the process to obtain the backlight image. For example, cstmod ≈ 1.7 for a backlight image obtained by least means squares.

Practically, by linearity, all operations to modulate the backlight image apply to the backlight coefficients $a_i$ as a correcting factor which transforms the coefficients $a_i$ into new coefficients $\tilde{a}_1$ such that one gets

$$Ba_{mod} = \sum_i \tilde{a}_1 \psi_i$$

In step 12, the data needed to determine the backlight image Bal, output from step 11, are encoded by means of an encoder ENC1 and added in a bitstream BF which may be stored on a local or remote memory and/or transmitted through a communication interface (e.g. to a bus or over a communication network or a broadcast network).

For example, the data to be encoded are limited to the weighting coefficients $a_i$ or $\tilde{a}_1$ when known non-adaptive shape functions are used, but the shape functions $\psi i$ may also be a priori unknown and then encoded in the bitstream BF, for instance in a case of a somewhat optimal mathematical construction for better fitting. So, all the weighting coefficients $a_i$ or $\tilde{a}_1$ (and potentially shape functions $\psi i$) are encoded in the bitstream BF.

Advantageously, the weighting coefficients $a_i$ or $\tilde{a}_1$ are quantized before encoded in order to reduce the size of the bitstream BF.

In step 13, a residual image Res is calculated by dividing the image by a decoded version $\widehat{Ba}$ of the backlight image.

It is advantageous to use the decoded version $\widehat{Ba}$ of the backlight image to ensure a same backlight image on both encoder and decoder side, thus leading to a better precision of a final decoded image $\hat{I}$.

More precisely, the luminance component L and potentially each colour component C(i) of the image I, obtained from the module IC, is divided by the decoded version $\widehat{Ba}$ of the backlight image. This division is done pixel per pixel.

For example, when the components R, G or B of the image I are expressed in the color space (R,G,B), the component RRes, GRes and BRes are obtained as follows:

$$Rres= R/\widehat{Ba}, \quad Gres= G/\widehat{Ba}, \quad Bres= B/\widehat{Ba},$$

For example, when the components X, Y or Z of the image I are expressed in the color space (Y,Y,Z), the component XRes, YRes and ZRes are obtained as follows:

$$Xres= X/\widehat{Ba} \quad Yres= Y/\widehat{Ba} \quad Zres= Z/\widehat{Ba}$$

According to an embodiment, in step 14, the decoded version $\widehat{Ba}$ of the backlight image is obtained by decoding at least partially the bitstream BF by means of a decoder DEC1.

As explained before, some data needed to obtain the backlight image, output of step 11, have been encoded (step 12) and then obtained by at least partially decoding the bitstream BF.

Following the example given above, weighting coefficients $\widehat{a_1}$ (and potentially shape functions $\widehat{\psi_1}$) are then obtained as output of step 14.

Then, in step 15, a module BAG generates a decoded version $\widehat{Ba}$ of the backlight image from the weighting coefficients $\widehat{a_1}$ and either some known non-adaptive shape functions or the shape functions $\widehat{\psi_1}$ by:

$$\widehat{B_a} = \sum_i \widehat{a_1} \widehat{\psi_1}$$

In step 16, a module TMO tone-maps the residual image Res in order to get a viewable residual image $Res_v$.

It may appear that the residual image Res may not be viewable because its dynamic range is too high and because a decoded version of this residual image Res shows too visible artifacts. Tone-mapping the residual image remedies to at least one of these drawbacks.

The invention is not limited to any specific tone-mapping operator. This single condition is that the tone-mapping operator shall be reversible.

For example, the tone-mapping operator defined by Reinhard may be used (Reinhard, E., Stark, M., Shirley, P., and Ferwerda, J., \Photographic tone reproduction for digital images," ACM Transactions on Graphics 21 (July 2002)), or Boitard, R., Bouatouch, K., Cozot, R., Thoreau, D., & Gruson, A. (2012). Temporal coherency for video tone mapping. In A. M. J. van Eijk, C. C. Davis, S. M. Hammel, & A. K. Majumdar (Eds.), Proc. SPIE 8499, Applications of Digital Image Processing (p. 84990D-84990D-10)).

In step 18, a module CLI clips the viewable residual image $Res_v$ before encoding to limit its dynamic range to a targeted dynamic range TDR which is defined, for example, according to the capabilities of the encoder ENC2.

In step 19, the viewable residual image $Res_v$ is

encoded by means of an encoder ENC2 in a bitstream F which may be stored on a local or remote memory and/or transmitted through a communication interface (e.g. on a bus or over a communication network or a broadcast network).

According to an embodiment of the step 16, tone mapping the residual image comprises either a gamma correction or a SLog correction according to the pixel values of the residual image.

The viewable residual image $Res_v$ is then given, for example, by:

$$Res_v = A.\,Res^\gamma$$

with A being a constant value, $\gamma$ being a coefficient of a gamma curve equal, for example, to 1/2.4.

Alternatively, the viewable residual image $Res_v$ is given, for example, by:

$$Res_v = a.\ln(Res + b) + c$$

with a,b and c being coefficients of a SLog curve determined such that 0 and 1 are invariant, and the derivative of the SLog curve is continuous in 1 when prolonged by a gamma curve below 1. Thus, a,b and c are functions of the parameter $\gamma$.

According to an embodiment, the parameter $\gamma$ of the gamma-Slog curve is encoded in the bitstream BF.

Applying a gamma correction on the residual image Res, pulls up the dark regions but does not lower enough high lights to avoid burning of bright pixels.

Applying a SLog correction on the residual image Res lowers enough high lights but does not pull up the dark regions.

Then, according to a preferred embodiment of the step 16, the module TMO applies either the gamma correction or the SLog correction according to the pixel values of the residual image Res.

For example, when the pixel value of the residual image Res is below a threshold (equal to 1), then the gamma correction is applied and otherwise the SLog correction is applied.

By construction, the viewable residual image $Res_v$ usually has a mean value more or less close to 1 depending on the brightness of the image I, making the use of the above gamma-Slog combination particularly efficient.

According to an embodiment of the method, in step 17, a module SCA scales the viewable residual image $Res_v$ before clipping (step 18) and encoding (step 19) by multiplying each component of the viewable residual image $Res_v$ by a scaling factor cstscaling. The resulting residual image $Res_s$ is then given by

$$Res_s = cstscaling.\,Res_v$$

In a specific embodiment, the scaling factor cstscaling is defined to map the values of the viewable residual image $Res_v$ between from 0 to the maximum value 2N-1, where N is the number of bits allowed as input for the coding by the encoder ENC2.

This is naturally obtained by mapping the value 1 (which is roughly the mean value of the viewable residual image $Res_v$) to the mid-gray value 2N-1. Thus, for a viewable residual image $Res_v$ with a standard number of bits N=8, a scaling factor equal to 120 is a very consistent value because very closed to the neutral gray at 27=128.

The resulting residual image $Res_s$ is then clipped (step 18) and encoded (step 19) by means of an encoder ENC2.

The tone-mapping and scaling of the viewable residual image $Res_v$ is a parametric process. The parameters may be fixed or not and in the latter case they may be encoded in the bitstream BF by means of the encoder ENC1.

According to an embodiment of the method, the constant value $\gamma$ of the gamma correction, the scaling factor cstscaling may be parameters that are encoded in the bitstream BF.

It may be noted that the choice of the parameters $\alpha, cst_{mod}, cst_{scaling}, \gamma, \beta$ gives room for the choice of the tone-mapping which suits the content the best following the taste of an expert in post-production and color grading.

On the other hand, universal parameters may be defined in order to be acceptable for all of a large variety of images. Then, no parameters are encoded in the bitstream BF.

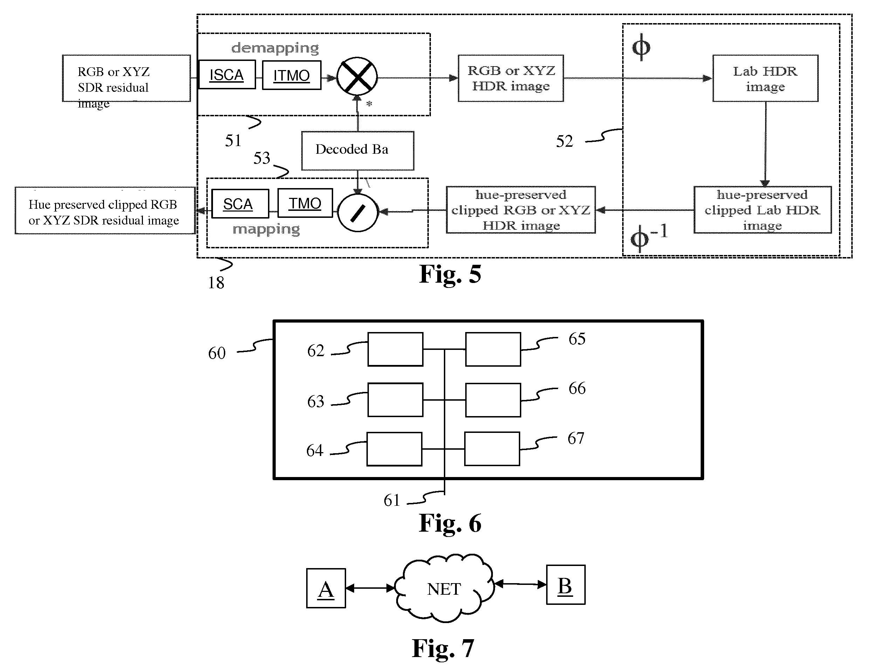

**Fig. 5** illustrates how the module CLI clips (18) the viewable residual images $Res_v$ or $Res_s$. The clipping insures that the mapped residual SDR images can be used as input to a SDR codec limited to certain amount N of bits for the dynamic of the components RGB or XYZ.

One wants to preserve HDR colors through the clipping (18). Hence, luminance and/or saturation must be altered in order clip to the acceptable domain for the SDR codec. This is why one must use a space where hue is defined, like a Lab space or HSC spaces.

Accordingly clipping (18) a pixel in the standard dynamic range tone-mapped residual image comprises a step of determining (51) the pixel in the high dynamic range space corresponding to the pixel to clip.

In a Lab space, the saturation is defined by $C^2 = a^2 + b^2$ and the hue is the angle defined by h = atan (b/a).

Preserving the hue means that the clipping must be performed in the plane containing the vertical line (a=0, b=0) and corresponding to the angle h.

**Fig. 8** and **Fig. 9** illustrate how an acceptable cube 2553 in the RGB mapped residual SDR space is mapped in the Lab HDR space for fixed gamma, scaling and backlight parameters. **Fig. 10** Illustrates the envelope of the acceptable domain in the HDR Lab Space, for a defined hue h. This envelope is the intersection of the acceptable domain mapped in the Lab HDR space, with the plane defined by the angle h and containing the vertical line (a=0, b=0).

If one pixel in the SDR space needs to be clipped, this pixels values are not in the RGB cube. As a consequence, the corresponding pixel in the HDR space is outside the acceptable RGB domain mapped in the Lab HDR space. This means that the corresponding pixel is outside the envelope defined by the hue plane in the HDR space, as represented by **Fig. 10.**

In order to clip the pixel by preserving the hue in the HDR image, one has to project the pixel on or inside the envelope, in the HDR Lab space. Accordingly, clipping (18) a pixel in the standard dynamic range tone-mapped residual image comprises the step of projecting (52), in the high dynamic range space, the associated pixel onto the image of the standard dynamic range acceptable domain by preserving the hue.

The clipped pixel in the SDR space is then the pixel corresponding (53) to the projected pixel in the HDR Lab space.

As the projected pixel one should consider the closest point on the envelope (represented by c_proj on **Fig. 10)** but this method is costly and may not be practical in real-time.

A simpler way is to take a point inside the envelope, like CIE Standard Illuminant D65 (g on **Fig. 10),** and to find the intersection between the segment [point, pixel] and the envelope (tg_proj on **Fig. 10).**

Other projections may be performed, by choosing other points inside the envelope. For instance, desaturation projection (d_proj on **Fig. 10)** is performed when the point chosen inside the envelope is the pixel with saturation set to zero.

A practical implementation of the method could use a dichotomy-based algorithm, considering at each step the middle of the previous segment[point, pixel], until the considered point is inside the envelope and a convergence test is satisfied.

It is difficult to determine the acceptable domain envelope in the HDR Lab space. It is easier to perform the Inside/Outside test after transformation back to the SDR space: as the acceptable domain is a cube in the SDR space, the determination is almost immediate. Any kind of convergence test can be used, like a threshold, a distance to the border of the cube in the SDR space, a number of iterations ...

The tone-mapping and scaling of the viewable residual image Res$_v$ is a parametric process. The parameters may be fixed or not and in the latter case they may be encoded in the bitstream BF by means of the encoder ENC1.

According to an embodiment of the method, the constant value $\gamma$ of the gamma correction, the scaling factor cstscaling may be parameters which are encoded in the bitstream BF.

It may be noted that the choice of the parameters $\alpha$, cst$_{mod}$,cst$_{scaling}$,$\gamma$,$\beta$ gives room for the choice of the tone-mapping which suits the content the best following the taste of an expert in post-production and color grading.

On the other hand, universal parameters may be defined in order to be acceptable for all of a large variety of images. Then, no parameters are encoded in the bitstream BF.

The encoders ENC1 and ENC2 are not limited to a specific encoder but when an entropy encoder is required, an entropy encoder such as a Huffmann coder, an arithmetic coder or a context adaptive coder like Cabac used in h264/AVC or HEVC is advantageous.

The encoders ENC1 and ENC2 are not limited to a specific encoder which may be, for example, an image/video coder with loss like JPEG, JPEG2000, MPEG2, h264/AVC or HEVC.

On **Fig. 1-5,** the modules are functional units, which may or not be in relation with distinguishable physical units. For example, these modules or some of them may be brought together in a unique component or circuit, or contribute to functionalities of a software. A contrario, some modules may potentially be composed of separate physical entities. The apparatus which are compatible with the invention are implemented using either pure hardware, for example using dedicated hardware such ASIC or FPGA or VLSI, respectively «Application Specific Integrated Circuit », « Field-Programmable Gate Array », « Very Large Scale Integration », or from several integrated electronic components embedded in a device or from a blend of hardware and software components.

**Fig. 6** represents an exemplary architecture of a device 60 which may be configured to implement a method described in relation with **Fig. 1-5.**

Device 60 comprises following elements that are linked together by a data and address bus 61:

> a microprocessor 62 (or CPU), which is, for example, a DSP (or Digital Signal Processor);
> a ROM (or Read Only Memory) 63;
> a RAM (or Random Access Memory) 64;
> an I/O interface 65 for reception of data to transmit, from an application; and
> a battery 66

According to a variant, the battery 66 is external to the device. Each of these elements of **Fig. 6** are well-known by those skilled in the art and won't be disclosed further. In each of mentioned memory, the word « register » used in the specification can correspond to area of small capacity (some bits) or to very large area (e.g. a whole program or large amount of received or decoded data). ROM 63 comprises at least a program and parameters. Algorithm of the methods according to the invention is stored in the ROM 63. When switched on, the CPU 62 uploads the program in the RAM and executes the corresponding instructions.

RAM 64 comprises, in a register, the program executed by the CPU 62 and uploaded after switch on of the device 60, input data in a register, intermediate data in different states of the method in a register, and other variables used for the execution of the method in a register.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

According to a specific embodiment of encoding or encoder, the image I is obtained from a source. For example, the source belongs to a set comprising:

a local memory (63 or 64), e.g. a video memory or a RAM (or Random Access Memory), a flash memory, a ROM (or Read Only Memory), a hard disk ;
a storage interface (65), e.g. an interface with a mass storage, a RAM, a flash memory, a ROM, an optical disc or a magnetic support;
a communication interface (65), e.g. a wireline interface (for example a bus interface, a wide area network interface, a local area network interface) or a wireless interface (such as a IEEE 802.11 interface or a Bluetooth® interface); and
an image capturing circuit (e.g. a sensor such as, for example, a CCD (or Charge-Coupled Device) or CMOS (or Complementary Metal-Oxide-Semiconductor)).

According to different embodiments of encoding or encoder, the bitstream BF and/or F are sent to a destination. As an example, one of bitstream F and BF or both bitstreams F and BF are stored in a local or remote memory, e.g. a video memory (64) or a RAM (64), a hard disk (63). In a variant, one or both bitstreams are sent to a storage interface (65), e.g. an interface with a mass storage, a flash memory, ROM, an optical disc or a magnetic support and/or transmitted over a communication interface (65), e.g. an interface to a point to point link, a communication bus, a point to multipoint link or a broadcast network.

According to different embodiments, device 60 being configured to implement an encoding method described in relation with **Fig. 1-4,** belongs to a set comprising:

a mobile device ;
a communication device ;
a game device ;
a tablet (or tablet computer) ;
a laptop ;
a still image camera;
a video camera ;
an encoding chip;
a still image server; and
a video server (e.g. a broadcast server, a video-on-demand server or a web server).

According to an embodiment illustrated in **Fig. 7,** in a transmission context between two remote devices A and B over a communication network NET, the device A comprises means which are configured to implement a method for encoding an image as described in relation with the **Fig. 1** and the device B comprises means which are configured to implement a method for decoding.

According to a variant of the invention, the network is a broadcast network, adapted to broadcast still images or video images from device A to decoding devices including the device B.

Implementations of the various processes and features described herein may be embodied in a variety of different equipment or applications, particularly, for example, equipment or applications. Examples of such equipment include an encoder, a post-processor processing output from a decoder, a pre-processor providing input to an encoder, a video coder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

**Claims**

1. A method for encoding an image with an input dynamic range, said method comprising:

   - calculating (13) from the image a residual image with an output dynamic range;
   - clipping (18) the residual image;
   - encoding (19) the clipped residual image;

   wherein clipping (18) a pixel of the residual image comprises:

   - determining (51) the pixel in the input dynamic range space corresponding to the pixel to clip;
   - obtaining the clipped pixel by projecting (52) the corresponding pixel in the input dynamic range space by preserving the hue,

   the clipped pixel in the output dynamic range space is then the pixel corresponding (53) to the projected pixel in the input dynamic range space.

2. Method according to claim 1, wherein the output dynamic range is smaller than the input dynamic range.

3. Method according to claim 1 or 2, wherein the input dynamic range format and the output dynamic range format are either RGB or XYZ.

4. Method according to any of the previous claims, wherein projecting (52) the corresponding pixel is performed toward a pixel inside the acceptable domain in the input dynamic range space.

5. Method according to claim 4, wherein projecting (52) the corresponding pixel is performed by desaturation and preserving the luminance.

6. Method according to any of the previous claims, comprising

   - obtaining (11) a backlight image from the image; and
   - calculating (13) the residual image by dividing the image by the backlight image.

7. Method according to any of claims 1 to 5, comprising

   - obtaining (11) a backlight image from the image;
   - encoding (12) the backlight image; and
   - calculating (13) the residual image by dividing the image by a decoded version of the backlight image.

8. Method according to claim 6 or 7, wherein obtaining (11) the backlight image from the image comprises:

   - obtaining a backlight image from a luminance component of the image; and
   - modulating the backlight image with a mean luminance value ($L_{mean}$) of the image.

9. Method according to claim 8, wherein obtaining (11) the backlight image from the image further comprises:

   - normalizing the backlight image by its mean value before modulating the backlight image.

10. Method according to any of the previous claims, comprising

    - obtaining (16) a tone-mapped residual image by tone-mapping the residual image;
    - clipping (18) the tone-mapped residual image; and

- encoding (19) the clipped tone-mapped residual image.

**11.** Method according to any of the previous claims, wherein said image is obtained from a source belonging to a set comprising:

- a local memory;
- a storage interface;
- a broadcast interface ;
- a communication interface; and
- an image capturing circuit.

**12.** Method according to any of the previous claims, wherein the image is encoded into an encoded image, the encoded image being sent to a destination belonging to a set comprising:

- a local memory;
- a storage interface; and
- a communication interface;

**13.** Device for encoding an image with an input dynamic range, said device comprising a processor (62) configured to:

- calculate from the image a residual image with an output dynamic range;
- clip the residual image;
- encode the clipped residual image,
- determine for each pixel to clip the corresponding pixel in the input dynamic range space;
- obtain the clipped pixels by projecting the corresponding pixels in the input dynamic range space by preserving the hue,

the clipped pixel in the output dynamic range space is then the pixel corresponding to the projected pixel in the input dynamic range space.

**14.** Device according to claim 13, wherein said device belongs to a set comprising:

- a mobile device;
- a communication device;
- a game device;
- a tablet;
- a laptop
- a still image camera;
- a video camera;
- an encoding chip;
- a still image server; and
- a video server.

**15.** Device according to claim 13 or 14, wherein said device comprises means to obtain said image, belonging to a set comprising:

- a local memory;
- a storage interface;
- a broadcast interface;
- a communication interface; and
- an image capturing circuit.

**16.** Device according to any of claims 13 to 15, wherein said device comprises means to send an encoded image to a destination, which belongs to a set comprising:

- a local memory;
- a storage interface;
- a broadcast interface;
- a display; and
- a communication interface.

**17.** A computer program product comprising program code instructions to execute the steps of the encoding method according to claim 1 when this program is executed on a computer.

Fig. 1

Fig. 2

Fig. 3

Fig. 4

EP 3 113 494 A1

**Fig. 5**

**Fig. 6**

**Fig. 7**

Fig. 8

Fig. 9

Fig. 10

Fig. 11

Europäisches
Patentamt

European
Patent Office

Office européen
des brevets

**EUROPEAN SEARCH REPORT**

Application Number

EP 15 30 6039

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2010/013748 A1 (COK RONALD S [US] ET AL) 21 January 2010 (2010-01-21) * paragraph [0061] - paragraph [0062] * * page 5 * ----- | 1-17 | INV. H04N19/30 |
| Y | KORHONEN J ET AL: "Subjective comparison of brightness preservation methods for local backlight dimming displays", PROCEEDINGS OF SPIE, S P I E - INTERNATIONAL SOCIETY FOR OPTICAL ENGINEERING, US, vol. 9395, 8 January 2015 (2015-01-08), pages 939504-939504, XP060044929, ISSN: 0277-786X, DOI: 10.1117/12.2079241 ISBN: 978-1-62841-730-2 * pages 939504-2, line 1 - line 3 * * pages 939504-3, line 11 - line 18 * * pages 939504-5, line 16 - line 18 * ----- | 1-17 | |
| Y | US 2013/100178 A1 (NINAN AJIT [US] ET AL) 25 April 2013 (2013-04-25) * paragraph [0047] * * paragraph [0068] * ----- | 6-10 | TECHNICAL FIELDS SEARCHED (IPC) H04N |
| Y | TAKAO JINNO ET AL: "New local tone mapping and two-layer coding for HDR images", 2012 IEEE INTERNATIONAL CONFERENCE ON ACOUSTICS, SPEECH AND SIGNAL PROCESSING (ICASSP 2012) : KYOTO, JAPAN, 25 - 30 MARCH 2012 ; [PROCEEDINGS], IEEE, PISCATAWAY, NJ, 25 March 2012 (2012-03-25), pages 765-768, XP032227239, DOI: 10.1109/ICASSP.2012.6287996 ISBN: 978-1-4673-0045-2 * section 3 first paragraph * ----- | 10 | |

The present search report has been drawn up for all claims

| Place of search | Date of completion of the search | Examiner |
|---|---|---|
| Munich | 8 December 2015 | Regidor Arenales, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.........................................................................

& : member of the same patent family, corresponding document

EPO FORM 1503 03.82 (P04C01)

## EP 3 113 494 A1

**ANNEX TO THE EUROPEAN SEARCH REPORT
ON EUROPEAN PATENT APPLICATION NO.**

EP 15 30 6039

08-12-2015

| Patent document cited in search report | | Publication date | Patent family member(s) | | Publication date |
|---|---|---|---|---|---|
| US 2010013748 | A1 | 21-01-2010 | CN | 102160112 A | 17-08-2011 |
| | | | EP | 2311025 A1 | 20-04-2011 |
| | | | JP | 5122683 B2 | 16-01-2013 |
| | | | JP | 2011528530 A | 17-11-2011 |
| | | | KR | 20110029178 A | 22-03-2011 |
| | | | TW | 201009804 A | 01-03-2010 |
| | | | US | 2010013748 A1 | 21-01-2010 |
| | | | WO | 2010008468 A1 | 21-01-2010 |
| US 2013100178 | A1 | 25-04-2013 | CN | 102947876 A | 27-02-2013 |
| | | | EP | 2583272 A1 | 24-04-2013 |
| | | | US | 2013100178 A1 | 25-04-2013 |
| | | | WO | 2011163114 A1 | 29-12-2011 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Advanced video coding for generic audiovisual Services. *SERIES H: AUDIOVISUAL AND MULTIMEDIA SYSTEMS, Recommendation ITU-T H.264, Telecommunication Standardization Sector of ITU,* January 2012
- **REINHARD, E. ; STARK, M. ; SHIRLEY, P. ; FERWERDA, J.** Photographic tone reproduction for digital images. *ACM Transactions on Graphics,* July 2002, 21

- Temporal coherency for video tone mapping. **BOITARD, R. ; BOUATOUCH, K. ; COZOT, R. ; THOREAU, D. ; GRUSON, A.** Proc. SPIE 8499, Applications of Digital Image Processing. 2012, 84990D-84990D, 10